(19) Europäisches Patentamt

European Patent Office

Office européen des brevets

(11) **EP 4 317 965 B1**

(12) **EUROPEAN PATENT SPECIFICATION**

(45) Date of publication and mention
of the grant of the patent:
**01.07.2026  Bulletin 2026/27**

(21) Application number: **22188274.9**

(22) Date of filing: **02.08.2022**

(51) International Patent Classification (IPC):
*G01N 30/20* (2006.01)    *H01M 10/00* (2006.01)
*G01N 30/88* (2006.01)    *G01N 30/72* (2006.01)

(52) Cooperative Patent Classification (CPC):
**G01N 30/20; G01N 30/16;** G01N 30/72;
G01N 30/88

(54) **ASSEMBLY AND METHOD FOR SUPPLYING A GAS STREAM**

ANORDNUNG UND VERFAHREN ZUR BEREITSTELLUNG EINES GASSTROMS

ENSEMBLE ET PROCÉDÉ D'ALIMENTATION D'UN FLUX DE GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.02.2024  Bulletin 2024/06**

(73) Proprietor: **Karlsruher Institut für Technologie
76131 Karlsruhe (DE)**

(72) Inventors:
• **Hofmann, Andreas
76297 Stutensee (DE)**
• **Anna, Smith
76344 Eggenstein (DE)**
• **Müller, Freya
76297 Stutensee (DE)**

• **Reuter, Ingo
76139 Karlsruhe (DE)**

(74) Representative: **Altmann Stößel Dick
Patentanwälte PartG mbB
Theodor-Heuss-Anlage 2
68165 Mannheim (DE)**

(56) References cited:
EP-A1- 3 696 902      WO-A1-2017/061803
US-A1- 2018 299 414

• **GREGORY GACHOT ET AL: "Gas
Chromatography/Mass Spectrometry As a
Suitable Tool for the Li-Ion Battery Electrolyte
Degradation Mechanisms Study", ANALYTICAL
CHEMISTRY, vol. 83, no. 2, 15 January 2011
(2011-01-15), pages 478 - 485, XP055045121,
ISSN: 0003-2700, DOI: 10.1021/ac101948u**

**Description**

Field of the invention

The present invention relates to an assembly and a method for supplying a gas stream from a sample to at least one analytical instrument as well as a related computer program, a system for determining at least one property of a gaseous component in the gas stream, and a use of the system for a quantitative measurement of the gaseous component in the gas stream released by a chemical energy storage system.

Related art

Although gases have a key importance in many processes, the handling of gases is often more challenging compared to solids and liquids. A major task is to transport a gas from a reaction site to an analysis tool without loss, chemical conversion and/or contamination. If quantitative measurements of an absolute gas amount is required, additional issues which concern calibration and determination of the absolute gas amount arise. In principle, a wide variety of methods and devices for analyzing and quantifying gases are known. A widely used approach is gas chromatography, which may provide high sensitivity and accuracy with regard to gas identification and gas quantification. Further approaches include gas analyzers based on IR analysis, or electrochemical gas analyzers based on specific electrochemical reactions. For a rapid detection, semi-quantitative gas measuring tubes can be used, which are capable of detecting a gas by using a chemical reaction in a tube and quantifying an amount of the gas by using a flow of a constant quantity of air.

Chemical energy storage systems are an example in which gas processes are of elementary importance. A special case of energy storage systems are secondary batteries based on Li-ion or post-Li ion technologies. After assembling a Li-ion cell, gas evolution can occur under various instances, e.g. during cell formation, under normal cell operation and/or under abuse scenarios. Moreover, gassing of an operating cell may be an indicator for electrolyte decomposition under safety-relevant conditions, such as an overcharge that may lead to a thermal runaway. As described in P. Stenzel, F. Horsthemke, M. Winter and S. Nowak, Chromatographic Techniques in the Research Area of Lithium Ion Batteries: Current State-of-the-Art, Separations 2019, 6, 26 and B. Rowden and N. Garcia-Araez, A review of gas evolution in lithium ion batteries, Energy Reports 6 (2020) 10-18 in more detail, attempts were made to elucidate an understanding of gas formation in Li-ion cells, especially with respect to a precise determination of amounts of gas formed in a Li-ion cell and a quantitative analysis of individual gases. For this purpose, various combinations of methods have been used, such as a coupling of gas chromatography (GC) with FT-IR, FT-IR with special gas analyzers, FT-IR with μGC, or FT-IR with NDIR and paramagnetic analyzers, in particular since using the GC-MS technique alone, which is ideally suited for volatile organic solvents, exhibits, in practice, often limits for gas measurements.

Still, a strong interest exists in detecting relevant gas species directly during cycling, preferably by using on-line mass spectroscopy (MS) for *in-situ* determination. Typical cells which are used today for *in-situ* gas analysis, in particular differential electrochemical mass spectrometry (DEMS) and/or online electrochemical mass spectrometry (OEMS), are specifically designed cells which are not comparable to commercial pouch-bag cells, prismatic cells, or round cells. For a gas-volume determination in a pouch-bag cell, two methods are commonly used: firstly, a determination by water displacement and, secondly, a determination using Archimedes' principle. However, both methods are elaborate for determining small volume changes, require specific equipment for cycling the pouch-bag cell under gas control, and cannot provide information about individual gas species. Moreover, a gas amount can be falsified by gas insertion into electrodes. Further, directly measuring the cell dimensions in order to estimate gas formation is, although practiced, subject to a relatively high uncertainty.

Various procedures exist for supplying gas from a sample into an analytical instrument. However, gas extraction from the sample may be impeded by a sample which may- despite gas formation - be under negative pressure relative to a surrounding atmosphere, however, with a notable exception of gases that are evolved during thermal runaway. Basically, known extraction methods can be divided into two different approaches: firstly, direct supplying a gas stream from the sample to the analytical instrument and, secondly, indirectly supplying the stream gas from the sample to the analytical instrument via a gas container, such as a gas-tight syringe or a headspace vial.

On one hand, existing methods for gas injection into an analytical instrument using a syringe or a headspace vial may exhibit at least one of the following shortcomings:

- an over-pressure, or at least a normal pressure against atmosphere, is required to reliably fill the syringe;
- a residual amount of ambient gas usually remains in the needle;
- even when using a septum, a risk of puncturing the sample and contaminating the septum with outside atmosphere remains;
- if septa are applied to the samples, e.g. fixed with an adhesive tape or bonded with a sealant, a risk of contamination of the sample by these kinds of materials exists;

- to determine absolute quantities, it is necessary to know the total amount of gas, which requires additional error-prone measurements;
- high-precision gas-tight gas syringes require cleaning at an extensive effort;.
- reliable calibration requires several calibration mixtures having different concentrations;
- gas sampling may lead to a damage of a cover for the sample, which is then no longer hermetically sealed. As a result, a further use of the sample is no longer possible under defined conditions (e.g. water content);
- to achieve a balanced pressure, an addition of extra gas is required, which may dilute the sample and may, thus, complicate its analysis;
- when using small amounts of gas, e.g. 5 $\mu$l to 100 $\mu$l, error ranges may become large, especially due to pressure fluctuations;
- headspace and solid-phase micro-extraction (SPME) approaches largely depend on the particular compound, however, the composition of samples is often not known;
- glass surfaces in headspace vials can react with cell gases, e.g. HF, $PF_3$, etc., and may, thus, cause undesired additional signals; and/or
- a quantification using a headspace method is time-consuming and requires a high level of understanding.

On the other hand, a direct supply of the gas stream into the analytical instrument comprises various major challenges, especially at least one of:

- very specialized equipment is needed, which involves sophisticated circuits and requires a high level of user expertise;
- specially designed cells are often not directly comparable with commercial cells;
- dilution of the sample is often necessary due to a use of large containers;
- quantitative measurements may require a use of expensive calibration gas mixtures, especially when used with GCMS due to their non-linearity;
- adaptation to other sample containers is not easily feasible, in particular due to especially designed equipment.

G. Gachot, P. Ribière, D. Mathiron, S. Grugeon, M. Armand, J.-B. Leriche, S. Pilard, and S. Laruelle, Gas Chromatography/Mass Spectrometry As a Suitable Tool for the Li-Ion Battery Electrolyte Degradation Mechanisms Study, Anal. Chem. 2011, 83, pp. 478-485, describe an assembly designed for evacuating a sample chamber and, subsequently, introducing sample gas. Although not illustrated, it can be assumed that a vacuum pump can be shut off by using a valve so that an introduction of the sample, presumably via a flow regulating valve, can take place into an evacuated system. However, this system does not provide an exact knowledge of the pressure in a gas-filled loop. Further, the amount of gas cannot be controlled, except via a flow control valve; foreign gas cannot be added. Further, the vacuum is on the outlet side of the assembly, so that any impurities are always sucked through the loop and valve system. Further, quantified measurements are not possible without an internal standard gas. Further, a determination of the sample chamber volume is not possible. Finally, the arrangement does not allow gas separation of various compounds, especially $CO/CO_2$, $H_2$, He, $Ar/O_2$, $N_2$, or $CH_4$, which are important for Li-ion cells, due to MS detection or columns which are appropriate for polar organic compounds. Further, PLOT columns which could be used to separate the gaseous compounds are difficult to use in combination with MS due to particle contamination of the MS.

An assembly for supplying a gas stream from a sample to at least one analytical instrument is known e.g. from EP3696902A1 (LG CHEMICAL LTD).

Problem to be solved

It is therefore an objective of the present invention to provide an assembly and a method for supplying a gas stream from a sample to at least one analytical instrument as well as a related computer program, a system for determining at least one property of a gaseous component in the gas stream, and a use of the system, which at least partially overcome the above-mentioned problems of the state of the art.

It would be desirable to allow a reliable measurement of the gaseous component, calibrating respective gas quantities, and determining absolute amounts of the gas quantities in a sample. It would be, particularly, desirable to determine and quantify the gaseous component even at low pressure prevailing in the sample.

Summary of the invention

The present invention is defined in the appended claims. This problem is solved by an assembly and a method for supplying a gas stream from a sample to at least one analytical instrument as well as a related computer program, a system for determining at least one property of a gaseous component in the gas stream, and a use of the system having the features of the independent claims. Preferred embodiments are listed in the dependent claims or throughout the following description.

In a first aspect, an assembly for supplying a gas stream from a sample to at least one analytical instrument is disclosed. Herein, the assembly comprises:

-  a vacuum control device configured for providing a vacuum, having

    ◦ a first connection to the vacuum,
    ◦ at least one first valve designed for adjusting the vacuum, and
    ◦ a first outlet;

-  a gas inlet device configured for supplying the gas stream from the sample to the at least one analytical instrument, having

    ◦ a coupling element designed for providing a coupling to the sample for receiving the gas stream from the sample,
    ◦ a second valve designed for switching between the first outlet and the coupling element, and
    ◦ at last one second outlet for supplying the gas stream as a gas input stream to the at least one analytical instrument; and

-  a gas control device configured for receiving a gas output stream from the at least one analytical instrument, having

    ◦ at least one third valve designed for adjusting a pressure of the gas output stream, and
    ◦ at last one second connection designed for at least one of releasing the gas output stream or receiving a gas balance stream.

As generally used, the term "assembly" refers to a combination of at least two devices, wherein the assembly according to the present invention comprises the vacuum control device, the gas inlet device, and the gas control device. Herein, each of the devices may be an individual component. Alternatively, two or more of the devices may be integrated into a combined device. As a further alternative, one or more of the devices may be partitioned into two or more sub-devices. In addition, one or more of the devices may comprise at least one further component, which may be mentioned in the following or not.

As used herein, the term "sample" refers to at least one element which comprises one or more components, wherein at least one of the components is or comprises at least one gaseous component or is capable of generating at least one gaseous component. More particular, the sample may, preferably, be selected from a chemical energy storage system, especially from a Li-ion, a Na-ion, a Ca-ion, or a K-ion pouch-bag cell, a prismatic cell, or round cell; a lithium-sulfur battery; a fuel cell; a redox flow battery; or solid-state battery. However, a further kind of chemical energy storage system may also be feasible. Herein, the gaseous component can be released by the sample in order to constitute the "gas stream" which can be supplied from the sample to the at least one analytical instrument by using the assembly according to the present invention.

As further generally used, the term "analytical instrument" refers to an apparatus which is configured to determine at least one measurable property of at least one sample, wherein the analytical instrument according to the present invention is configured to determine at least one measurable property of a gaseous component supplied to the analytical instrument by using the assembly as disclosed herein. As used herein, the term "measurable property" refers to a material or chemical property of the gaseous component, in particular to a substance and/or composition of the gaseous component. Explicitly excluded from the term "measurable property" are properties of the gaseous component which are related to a pressure, a partial pressure, or a volume of the gaseous component.

As further used herein, the term "supplying" or any grammatical variation thereof refers to a process of providing the gas stream comprising a gaseous component from the sample to the at least one analytical instrument. Preferably, the at least one analytical instrument may be selected from a gas chromatography device, a mass spectrometer, a Fourier-transform infrared (FTIR) spectrometer, a gas detector, or a Raman spectrometer. However, a further type of analytical instrument may also be feasible. The gas stream may be supplied to a single analytical instrument. As an alternative, the gas stream may be provided to at least two individual analytical instruments, especially in consecutive manner and/or in a parallel manner.

As indicated above, the assembly comprises a vacuum control device, wherein the vacuum control device is configured for providing a vacuum. As used herein, the term "vacuum" refers to a negative pressure, preferably below 1 bar absolute pressure, more preferred below 750 mbar absolute pressure, especially below 250 mbar absolute pressure, within at least a portion of a volume, wherein conduits and receptacles which are comprised by the assembly constitute the volume. As a result, less than 250 ppm, preferably less than 100 ppm, more preferred less than 50 ppm, of a gaseous component is present in the residual gas, such that no traceable portion of the gaseous component is present in the at least the portion of the volume. For this purpose, the vacuum control device at least has

- a first connection to the vacuum,
- at least one first valve designed for adjusting the vacuum, and
- a first outlet.

Herein, the terms "first", "second", "third", "fourth", and "further" refer to different elements of the same kind which can be simultaneously present in the assembly, wherein the terms are, however, considered as a description without specifying any order and without excluding any embodiment in which still further elements of the same kind may be present.

The first connection to the vacuum is designed for providing access to a vacuum in order to allow the vacuum to expand to at least a desired portion of the volume provided by conduits and receptacles comprised by the assembly. As generally used, the term "connection" refers to a conduit which is configured for enabling a transport of the gas stream in at least one direction, especially as a "one-way connection" in a single direction, or as a "bidirectional connection" in two opposing directions. For a purpose of providing access to the vacuum, the first connection may, preferably, provide access to at least one vacuum pump configured to operate in a manner that the desired vacuum can be provided.

Further, the vacuum control device has at least one first valve which is designed for adjusting the vacuum. As generally used, the term "valve" refers to an element which is configured to assume at least two different positions, wherein an amount of the gas stream supplied through the valve depends on the selected position. By way of example, the valve my assume one of two positions "ON" and "OFF", wherein the gas streams through the valve in the position "ON", while no amount of the gas streams through the valve in the position "OFF". In a further example, the valve may assume one of an arbitrary position between "ON" and "OFF", wherein a desired amount of the gas which streams through the valve can be adjusted. In general, the valve can have one or more input ports and one or more output ports, wherein the at least one input port is designed for receiving a gas stream, while the at least one output port is designed for releasing a gas stream, an amount thereof depending on the selected position of the valve.

As indicated above, the at least one first valve is designed for adjusting the vacuum. As used herein, the term "adjusting" or any grammatical variation thereof refers to a process of implementing a desired value for a physical quantity, such as a pressure or an amount of gas, by using an element which is especially designed for this purpose. For this purpose, the at least one first valve may, preferably, comprise an oil-free and a grease-free valve or a valve cleaned from oil or grease, in particular a needle valve or a diaphragm valve. Both types of valves are particularly advantageous since they, generally, do not introduce any impurities, such as grease or oil, into the gas stream. In a preferred embodiment, the at least one first valve may comprise two individual valves, in particular, a needle valve and a diaphragm valve, wherein the diaphragm valve may be arranged between the first connection to the vacuum and the needle valve, while the needle valve may be arranged between the diaphragm valve and the first outlet as described below. However, using a further kind of valves, such as a multi-port valve, may also be feasible.

As further indicated above, the vacuum control device has a first outlet which may, preferably, be designed for providing the vacuum to one or more devices which are further comprised by the assembly, in particular to the gas inlet device, via the gas inlet device to the gas control device, and, optionally, to a volume control device as described below in more detail. As used herein, the term "outlet" refers to a one-way connection which is designed for enabling the transport of the gas stream out of the vacuum control device to at least one device further comprised by the assembly, especially depending on the selected embodiment and the performed method step.

**In** a preferred embodiment, the vacuum control device may, additionally, have at least one further component, which may, especially, be designed for supplying an inert carrier gas to the vacuum control device, in particular

- a connection to a source of an inert carrier gas, and
- at least one further valve designed for adjusting a stream of the inert carrier gas, and, optionally,
- preferably, at least one further manometer.

However, further kinds of components may also be feasible.

As generally used, the term "inert carrier gas" refers to at least one further gaseous component, which is added to the gas stream without being able to react with a gaseous component comprised by the gas stream and without being desired to be measured by the at least one analytical instrument. For this purpose, the inert carrier gas may, preferably, comprise a noble gas, particularly selected from at least one of helium (He), argon (Ar) or krypton (Kr); and/or nitrogen ($N_2$). However, using at least one further inert carrier gas may also be feasible. In a preferred embodiment, the inert carrier gas may be supplied by a source for at least one inert carrier gas embodied within the vacuum control device. Alternatively or in addition, the source may be an external source which may not be comprised by the vacuum control device. Depending on the embodiment of the source, the connection to the source may be embodied within the vacuum control device or, alternatively or in addition, be a conduit providing external connection from the source to the vacuum control device.

In this particular embodiment, the vacuum control device may, further, have at least one further valve which can be designed for adjusting a stream of the inert carrier gas. For a purpose of adjusting the stream of the inert carrier gas, the at least one further valve may, preferably, comprise a needle valve, more preferred an oil-free and grease-free needle valve, or a diaphragm valve. Both types of valves are particularly advantageous since they do not introduce any impurities into the stream of the inert carrier gas. In a preferred embodiment, the at least one further valve may comprise two individual valves, in particular, a needle valve and a diaphragm valve, wherein the diaphragm valve may be arranged between the connection to the source of the inert carrier gas and the needle valve, while the needle valve may be arranged between the diaphragm valve and the first outlet, wherein the first outlet may, in this particular embodiment, have two input ports, a first input port designed for receiving the vacuum and a second input port designed for receiving the stream of the inert carrier gas, and at least one output port, wherein a first output port may be connected to the gas inlet device, while an optional second output port may, preferably, be connected to a further manometer located between the two needle valves and designed for monitoring a first pressure upstream of the gas inlet device. However, using a further type of valve, preferably a multi-port valve, may also be feasible.

As already indicated above, the assembly further comprises a gas inlet device configured for supplying the gas stream from the sample to the at least one analytical instrument, having

- ∘ a coupling element designed for providing a coupling to the sample for receiving the gas stream from the sample,
- ∘ a second valve designed for switching between the first outlet and the coupling element, and
- ∘ at last one second outlet for supplying the gas stream as a gas input stream to the at least one analytical instrument.

As generally used, the term "coupling element" refers to an element which is configured to provide a fixed or, preferably, a detachable connection between two individual devices. The coupling element according to the present invention is designed for providing a detachable connection between the gas inlet device and a sample, preferably an arbitrary sample, which is capable of providing the desired gas stream to be analyzed by to the at least one analytical instrument and which comprises a fixed volume inside which may be unknown. For further details concerning the sample and the analytical instrument, reference can be made to the definitions above.

In a preferred embodiment, the coupling element may a quick coupling element, wherein a first portion of the quick coupling may, preferably permanently, be placed on a respective location on the gas inlet device, and wherein a further portion can be variably connected to at least one, preferably a plurality of, external adaptation elements. For this purpose, the coupling element may have a reception, wherein the reception may, especially, be designed for being connected to a fitting counterpart attached to the sample. As generally used, the term "reception" refers to an element of a device which is configured for receive a further element denoted by the term "counterpart" to be attached to the device by using the reception. Preferably, the reception according to the present invention may be designed and arranged to be capable of receiving a fitting counterpart attached, either fixedly or detachably, to the sample, wherein the term "fitting" refers to a property of the counterparts which facilitates the coupling between of the counterpart to the reception. This embodiment particular facilitates attaching and removing a sample as well as exchanging of samples. In this preferred embodiment, the coupling element may, in particular, comprise a septum which may be inserted into an attachment.

Further, the gas inlet device has at least one a second valve which is designed for switching between the first outlet and the coupling element. Herein, the at least one second valve may, preferably, be or comprise a diaphragm valve. More particular, the at least one second valve may, preferably, be or comprise a multi-valve manifold which is designed for controlling the flow of the gas stream and a potential access of a vacuum by using two membrane valves. However, the at least one second valve can also be embodied in a further manner known to the person skilled in the art.

Further, the gas inlet device has at last one second outlet which is designed for supplying the gas stream as a gas input stream to the at least one analytical instrument, in particular, for performing at least one measurement in the at least one analytical instrument in order to determine at least one property of a gaseous component in the gas stream. As used herein, the term "gas input stream" refers to the gas stream when supplied to the selected analytical instrument or, in a consecutive and/or a parallel manner, to at least two selected analytical instruments. Similarly, the term "gas output stream" refers to the gas stream when received from the selected analytical instrument or, in a consecutive and/or a parallel manner, from the at least two selected analytical instruments.

As indicated above, the assembly further comprises a gas control device which is configured for receiving the gas output stream from the at least one analytical instrument. In accordance with the present invention, the gas control device has

- ∘ an inlet for receiving the gas output stream from the at least one analytical instrument;
- ∘ at least one third valve designed for adjusting a pressure of the gas output stream, and
- ∘ at last one second connection designed for at least one of releasing the gas output stream or receiving a gas balance stream.

As indicated above, the gas control device has an inlet which is designed for receiving the gas output stream from the at least one analytical instrument. As used herein, the term "inlet" refers to a one-way connection which is designed for enabling the transport of the gas stream out of the at least one analytical instrument to the gas control device as further comprised by the assembly. However, using a bidirectional connection may also be feasible, especially in the embodiment in which the gas control device is configured to receive a gas balance stream. For this purpose, the inlet may have a single input port for receiving the gas output stream from a single analytical instrument or at least two analytical instruments in a line, and a first output port connected to the at least one third valve. In a particular embodiment, the inlet may have at least two input ports for receiving the individual gas output streams which may be individually provided by the at least two analytical instruments.

In a particular embodiment, the inlet may have two output ports, the first output port connected to the at least one third valve, while a second output port may, preferably, be connected to a first manometer which is designed for monitoring a first pressure in the gas stream. As generally used, the term "monitoring" or any grammatical variation thereof refers to a process of continuously deriving desired information, preferably without user interaction, while the term "recording" refers to taking at least one measurement value as at least one piece of desired information. Preferably, at least one value of the first pressure in the gas stream may be recorded after the assembly has been evacuated, either before or after at least one measurement has been performed by using the at least one analytical instrument. In this manner, the volume of the gas stream can be determined by using the at least one value of the first pressure in the gas stream, while the coupling to the sample is provided until recording the at least one value of the first pressure in the gas stream may be completed. In a preferred embodiment, the first manometer may be a first electronic manometer, especially in order to be capable of precisely monitoring the prevailing pressure during injection of the gas stream into the at least one analytical instrument and/or during release of the gas stream from the at least one analytical instrument. However, further embodiments are feasible.

The at least one third valve may, preferably, comprise a needle valve, more preferred an oil-free and grease-free needle valve, or a diaphragm valve. Both types of valves are particularly advantageous since they do not introduce any impurities into the stream of the inert carrier gas. In a preferred embodiment, the at least one third valve may comprise two individual valves, in particular, a diaphragm valve and a needle valve, wherein the needle valve may be arranged between the outlet of the least one selected analytical instrument, while the diaphragm needle may be arranged between the needle valve and the at last one second connection of the gas control device. However, using a further type of valve, preferably a multi-port valve, may also be feasible.

The at last one second connection is designed for releasing the gas output stream from the gas control device and/or for receiving a gas balance stream by the gas control device. In this manner, the gas output stream can be released from the assembly, such as into an atmosphere adjoining the at last one second connection and/or into a further receptacle that may be attached to the at last one second connection. The conduits and receptacles comprised by the assembly can be emptied from the gas stream in this manner, and can, still further, be flushed by the inert carrier gas that may be supplied by using the vacuum control device as described elsewhere herein in more detail. Alternatively or in addition, a gas balance stream can be received by the at last one second connection in order to adjust a desired value for the pressure within the gas control device and, preferably, the whole assembly, in particular, after the at least one measurement in the at least one analytical instrument may have been performed. For adjusting the desired pressure within the gas control device, the first manometer as, preferably, comprised by the gas control device, may be used. The gas balance stream may be supplied to the at last one second connection, in particular from the atmosphere adjoining the at last one second connection and/or, preferably, from a further receptacle attached to the at last one second connection, wherein the further receptacle may comprise at least one inert carrier gas, in particular at least one inert carrier gas as described above in connection with the vacuum control device. In a particular embodiment, the same external source may be used for supplying the at least one inert carrier gas to both the vacuum control device and to the gas control device. However, further embodiments are feasible.

In a particularly preferred embodiment, the assembly according to the present invention may further comprise

-    a volume control device configured for determining a volume of the gas stream, having

     ◦ at least one sample loop designed for receiving a known volume of the gas stream, and
     ◦ at least one fourth valve connected to a third connection to the vacuum, to the at least one second outlet comprised by the gas inlet device, and to the at least one sample loop.

Herein, the volume control device may be configured for determining the volume, in particular the total volume, of the gas stream and, when a non-compressible sample is used, also the internal pressure in the sample. As used herein, the term "determining" or any grammatical variation thereof relates to a process of generating at least one representative result, in particular a value for the volume occupied by the gas stream. In addition to a property of a gaseous component, also the volume of the gaseous component in the gas stream can be determined by employing the volume control device according to the present invention. For this purpose, the volume control device has at least one sample loop which is designed for receiving a known volume of the gas stream. For further details, reference can be made to the description below.

Further, the volume control device comprises at least one fourth valve which is connected to

  ◦ a third connection to the vacuum,
  ◦ to the at least one second outlet comprised by the gas inlet device, and
  ◦ to the at least one sample loop.

For this purpose, the fourth valve may, preferably, have at least six ports and at least two positions. However, further kinds of valves may also be feasible. For further details concerning the fourth valve, reference can be made to the description above with respect to the other valves and to the description below which illustrated a preferred embodiment of the fourth valve.

As indicated above, the at least one second outlet which is comprised by the gas inlet device is designed for supplying the gas stream as a gas input stream to the at least one analytical instrument. For a purpose of providing a connection not only to the at least one analytical instrument but, additionally, also to the at least one fourth valve, a switch may, preferably be used, which is configured to supply the gas stream to the at least one analytical instrument and/or to the at least one fourth valve.

In this particularly preferred embodiment, the volume control device may, more preferred, comprises a second manometer, preferably a second electronic manometer, which is designed for monitoring a second pressure that is prevailing in the volume control device. For further details using the second pressure for determining the volume of the gas stream, reference can be made to the description below.

In a further aspect, a system for determining at least one property of a gaseous component in a gas stream is disclosed. Accordingly, the system comprises

  -   the assembly for supplying the gas stream from the sample to the at least one analytical instrument according as described elsewhere herein; and
  -   the at least one analytical instrument.

For further details concerning the system, reference can be made to the description above and/or below with regard to the assembly and the at least one analytical instrument.

In a further aspect, a method for supplying a gas stream from a sample to at least one analytical instrument, in particular by using an assembly for supplying the gas stream from the sample to the at least one analytical instrument as described elsewhere herein, is disclosed. The method comprises the following steps a) to c):

  a) evacuating the assembly by providing access to a vacuum by using the vacuum control device;
  b) terminating the access to the vacuum, and supplying the gas stream from the sample to the gas inlet device; and
  c) providing time for performing at least one measurement in the at least one analytical instrument for determining at least one property of a gaseous component in the gas stream.

Herein, the indicated steps may, preferably, be performed in the given order, commencing with step a) and finishing with step c). However, any or all of the indicated steps may also be repeated several times and/or preformed concurrently in part. Further, one or more additional steps may also be performed.

In a so-denoted "evacuating step" according to step a), the assembly, in particular the conduits and receptacles comprised by the assembly, is evacuated by providing access to a vacuum by using the vacuum control device.

After terminating the access to the vacuum, the gas stream is supplied from the sample to the gas inlet device in a so-denoted "supplying step" according to step b).

In a so-denoted "measuring step" according to step c), time is provided for performing at least one measurement in the at least one analytical instrument for determining at least one property of a gaseous component in the gas stream. As indicated above, the at least one property does, however, not include a pressure, a partial pressure, or a volume of the gaseous component.

In a preferred embodiment, the method may be performed in form of repeated cycles, wherein each cycle starts with step a), continues with step b), and terminates with step c), in which manner consecutive gas streams originating from a single sample and/or a number of gas streams from different samples can, subsequently be measured. In this embodiment, the assembly is evacuated according to step a) after each measurement according to step c), whereby a new cycle is started, in particular to ensure that no traces of the previously measured gaseous components may remain in in the assembly. However, further embodiments are feasible.

In this preferred embodiment, the method may comprise a further step of

e) flushing the assembly by providing inert carrier gas by using the vacuum control device,

also denoted as "flushing step". In this manner, the conduits and receptacles which are comprised by the assembly can be emptied from the gas stream by using the inert carrier gas that may be supplied by using the vacuum control device as described elsewhere herein in more detail.

In a particularly preferred embodiment, the method according to the present invention may comprise a further step of

d) determining a volume of the gas stream by at least one of

  ∘ a defined amount of at least one inert gas; or
  ∘ using the volume control device,

Herein, further step d) may be performed after step a), preferably during the supplying step according to step b); after step b); during step c); and/or after step c). As described above and below in more detail, the volume control device which may, preferably, be comprised by the assembly is especially configured for this purpose.

In a first embodiment, the assembly can be used in an easy and reliable manner to determine gas volumes that are known, i.e. when a syringe is completely emptied after gas injection, or when a known amount of gas is introduced into the system. If these requirements cannot be achieved, e.g. when connecting a pouch-bag cell having an unknown gas volume, taking a part of a sample gas, or when a gas mouse having an unknown gas volume is used, further embodiments of the present invention can be used for determining an absolute gas amount of a gaseous species being present in the sample gas. Herein, the volume of the syringe may be used for determining the volume of the conduits and receptacles comprised by the assembly, in particular in an embodiment in which the syringe is known to have a defined volume under a defined pressure.

In a first embodiment, the assembly can be used for determining an absolute amount of a gaseous component in the gas stream by applying the following sub-steps:

  (i) an introducing step, which comprises introducing a defined amount of at least one inert gas into the sample, thereby generating a gas mixture comprising the defined amount of the at least one inert gas and the gaseous component in the sample to be determined;
  (ii) a modified supplying step, wherein the sample is attached to the gas inlet device, thereby supplying the gas mixture into the assembly;
  (iii) a modified measuring step, whereby the defined amount of the at least one inert gas within the gas mixture is measured by using the at least one analytical instrument; and
  (iv) an analyzing step, which comprises determining an absolute amount of the gaseous component in the gas stream by using calibration measurements with precisely defined quantities of both the at least one inert gas and of the gaseous component from the sample, thereby, particularly, determining a dilution of the gaseous component from the sample by using the defined amount of the at least one inert gas.

In this manner, quantitative amounts of the gaseous component in the sample can be determined by using the assembly without the volume control device.

In a further embodiment, determining the quantitative amounts of the gaseous component in the sample can, alternatively or in addition, be determined by using the volume control device as described elsewhere herein.

In particular, two or more independent methods for determining the quantitative amounts of the gaseous component in the sample may be combined, especially in order to provide a second independent determination of the gas volume and/or to reduce an error of the determining step.

In a further aspect, a computer program is disclosed. The computer program comprises instructions which, when the program is executed on a computer cause a processing device to perform the method for supplying the gas stream from the sample to the at least one analytical instrument as described elsewhere herein by using the assembly for supplying the gas stream from the sample to the at least one analytical instrument according to the present invention.

In a still further aspect, a non-transient computer-readable medium is disclosed. The non-transient computer-readable medium comprises instructions which, when executed by one or more processors, cause the one or more processors to perform the method for supplying the gas stream from the sample to the at least one analytical instrument as described elsewhere herein by using the assembly for supplying the gas stream from the sample to the at least one analytical instrument according to the present invention.

For further details concerning the method, the computer program and the non-transient computer-readable medium reference can be made to the description of the assembly.

With respect to the prior art, the assembly and the method for supplying a gas stream from a sample to at least one analytical instrument as well as a related computer program, the system for determining at least one property of a gaseous component in the gas stream, and the use of the system exhibit the following advantages. In particular, they allow a reliable measurement of the gaseous component, calibrating respective gas quantities, and determining absolute amounts of the gas quantities in a sample, especially in a pouch-bag cell, a prismatic cell, or a round cell, even at low pressure prevailing in the sample. Further, the assembly according to the present invention can, be used under reduced pressure (i.e. for small sample volumes which are injected into the evacuated assembly) as well as under normal pressure (i.e. for large sample volume) or, analogous to prior art procedures, by flushing the sampling gas through the assembly, or by using an over-pressure.

More particular, the following benefits are achieved hereby:

- by eliminating a need for using a syringe for enabling a gas transfer, a direct connection between the sample, in particular the pouch bag cell, and the gas inlet device is achieved without possible contamination from an adjoining atmosphere;
- no need remains for diluting the gas inside the sample, in particular pouch-bag cell, owing to direct adaption, thus resulting in a higher sensitivity of the measurements;
- an amount of gas volume as required for the measurements is significantly reduced, in particular, since no need to purge gas from the assembly remains;
- no tape on a surface of the sample, in particular the pouch bag cell, is needed.

As used herein, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically are used only once when introducing the respective feature or element. In most cases, when referring to the respective feature or element, the expressions "at least one" or "one or more" are not repeated, notwithstanding the fact that the respective feature or element may be present once or more than once.

Further, as used herein, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

Short description of the Figures

Further optional features and embodiments of the present invention are disclosed in more detail in the subsequent description of preferred embodiments, preferably in conjunction with the dependent claims. Therein, the respective optional features may be implemented in an isolated fashion as well as in any arbitrary feasible combination, as the skilled person will realize. It is emphasized here that the scope of the invention is not restricted by the preferred embodiments, but is defined by the appended claims.

In the Figures:

Figure 1 schematically illustrates a preferred embodiment of a system for determining at least one property of a gaseous component in a gas stream comprising an assembly for supplying the gas stream from a sample to at least one analytical instrument in accordance with the present invention;

Figure 2 schematically illustrates further preferred embodiments of the system for determining the at least one property of the a gaseous component in the gas stream comprising the assembly for supplying the gas stream from the sample to the at least one analytical instrument in accordance with the present invention;

Figure 3 schematically illustrates a preferred embodiment of a method for supplying the gas stream from the sample to the at least one analytical instrument by using the assembly according to the present invention.

Figure 4   illustrates experimental results demonstrating a correlation of a peak area to an injected volume of calibration gas mixtures using prior art (Figure 4a) and according to the present invention (Figure 4b); and

Figure 5   illustrates a gas volume dependent pressure obtained by using the assembly according to the present invention.

Detailed description of the embodiments

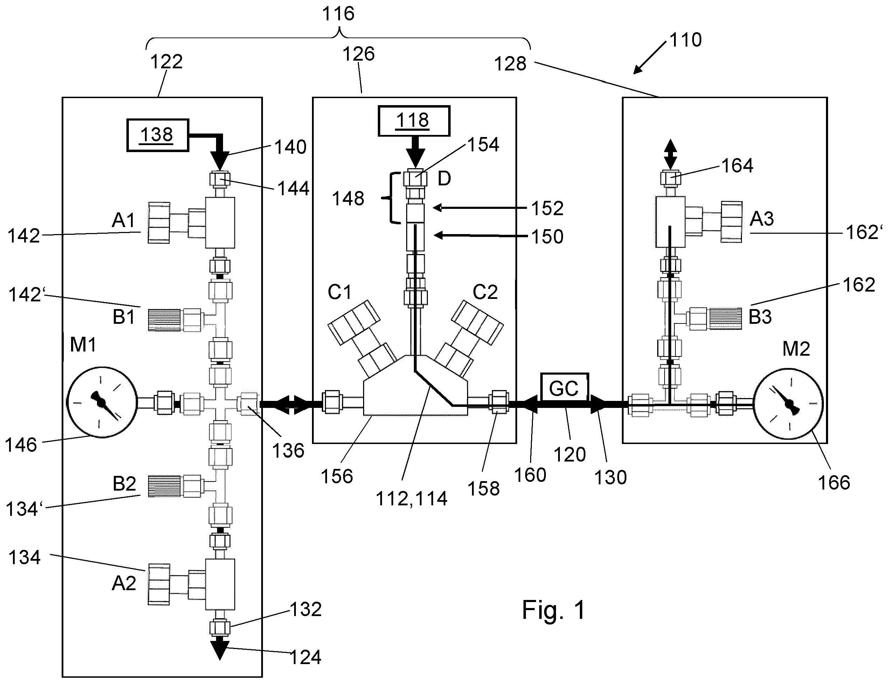

Figure 1 schematically illustrates a preferred embodiment of a system 110 for determining at least one property of a gaseous component 112 in a gas stream 114, wherein the system 110 comprises an assembly 116 for supplying the gas stream 114 from a sample 118 to an analytical instrument 120 according to the present invention. As shown in Figure 1, a gas chromatography device GC may be used for this purpose. Alternatively or in addition, a mass spectrometer, a Fourier-transform infrared (FTIR) spectrometer, a gas detector, or a Raman spectrometer may, further, be used as the analytical instrument 120. As further shown in Figure 1, the gas stream 114 is supplied to the gas chromatography device GC, 120 however, it may be provided (not depicted here) to more than one analytical instrument, especially in consecutive manner and/or in a parallel manner.

In accordance with the present invention, the assembly 116 comprises a vacuum control device 122 configured for providing a vacuum 124, a gas inlet device 126 configured for supplying the gas stream 114 from the sample 118 to the analytical instrument 120, and a gas control device 128 configured for receiving a gas output stream 130 from the analytical instrument 120.

As further illustrated in Figure 1, the vacuum control device 122 has a first connection 132 to the vacuum 124, two first valves 134, 134' which are designed for adjusting the vacuum 124 and a first outlet 136 which is designed for providing the vacuum 124 to the gas inlet device 126. Preferably, the two first valves 134, 134' as depicted here comprise a diaphragm valve A2 and an oil-free and a grease-free needle valve B2. However, using a further type of valve, preferably a multi-port valve, may also be feasible.

The preferred embodiment of the vacuum control device 122 as shown in Figure 1, in addition, comprises further components which are designed for supplying an inert carrier gas, especially a noble gas, particularly selected from helium (He), argon (Ar) and/or krypton (Kr); and/or nitrogen ($N_2$). In the preferred embodiment of Figure 1, the inert carrier gas is supplied by a source 138 that is embodied within the vacuum control device 122. Alternatively or in addition (not depicted here), the source 138 may be an external source located outside the vacuum control device 122.

In this preferred embodiment, the vacuum control device 122 further comprises a further connection 140 to the source 138 of the inert carrier gas, two further valves 142, 142' which are designed for adjusting a stream 144 of the inert carrier gas, and a further manometer M1, 146 which is designed for monitoring a first pressure upstream of the gas inlet device 126. Preferably, the two further valves 142, 142' as depicted here comprise a diaphragm valve A1 and an oil-free and a grease-free needle valve B1. However, using a further type of valve, preferably a multi-port valve, may also be feasible.

As further illustrated in Figure 1, the gas inlet device 126 has a coupling element 148 designed for providing a coupling to the sample 118 for receiving the gas stream 114 from the sample 118. In the preferred embodiment as depicted in Figure 1, the coupling element 148 is a quick coupling element having a first portion 150 which is permanently placed at the gas inlet device 126, and a second portion D, 152 which can be variably connected to a fitting counterpart 154 attached to the sample 118. In a particular embodiment, the first portion 150 may be a quick connect male adapter, while the second portion 152 may be a female quick connect counterpart; however, further embodiments are feasible.

Further, the gas inlet device 126 as shown in Figure 1 comprises a second valve 156 which is designed for switching between the first outlet 136 from the vacuum control device 122 and the coupling element 148 to a second outlet 158 designed for supplying the gas stream 114 as a gas input stream 160 to the analytical instrument 120. The second valve 156 may, preferably, be or comprise a diaphragm valve. As depicted in Figure 1, the second valve 156 is a multi-valve manifold which is designed for controlling the flow of the gas stream 114 and the access of the vacuum 124 by using two membrane valves C1, C2; however, further embodiments of the second valve 156 may also be feasible.

As further illustrated in Figure 1, the gas control device 128 has third valves 162, 162' which are designed for adjusting a pressure of the gas output stream 130. Preferably, the two third valves 162, 162' as depicted here comprise a diaphragm valve A3 and an oil-free and a grease-free needle valve B3. However, using a further type of valve, preferably a multi-port valve, may also be feasible.

Further according to Figure 1, the gas control device 128 has a second connection 164 which is designed for a gas exchange, preferably for releasing the gas output stream 130 to an adjoining atmosphere and/or into a further receptacle (not depicted here) attached to the second connection 164. In this manner, conduits and receptacles comprised by the assembly 116 can be emptied from the gas stream 114 and, if desired, be flushed by the inert carrier gas supplied by the vacuum control device 122 as described above.

Alternatively or in addition, a gas balance stream can be received via the second connection 164 to adjust a desired value for a pressure within the gas control device 128 and, preferably, the whole assembly 116, particularly after a measurement in the analytical instrument 120 may have been performed. As further depicted in Figure 1, a first manometer M2, 166 can be used for adjusting the desired pressure within the gas control device 128. The gas balance stream can be supplied to the second connection 164, particularly from the adjoining atmosphere and/or, preferably, from a further receptacle attached to the second connection 164. Herein, the further receptacle may comprise at least one inert carrier gas, in particular as described above in connection with the vacuum control device. In a further embodiment (not depicted here), the same external source may be used for supplying the at least one inert carrier gas to both the vacuum control device 122 and to the gas control device 128, however, however, further embodiments are feasible.

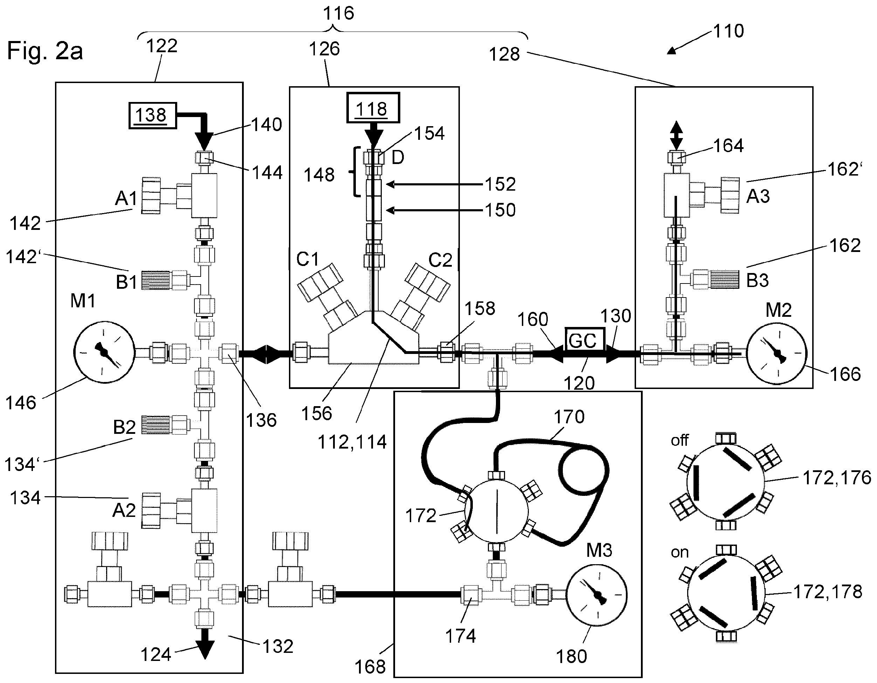

Figure 2a schematically illustrates a further preferred embodiment of the system 110 for determining at least one property of the gaseous component 112 in the gas stream 114 comprising the assembly 116 for supplying the gas stream 114 from the sample 118 to the analytical instrument 120 according to the present invention. In addition to the preferred embodiment of Figure 1, the assembly 116 as shown in Figure 2a further comprises a volume control device 168 configured for determining a volume of the gas stream. As depicted there, the volume control device 168 has a sample loop 170 which has a known volume and is, thus, designed for receiving a known volume of the gas stream 114.

Further, the volume control device 168 has a fourth valve 172 which is connected to a third connection 174 to the vacuum 124, to the second outlet 158 as comprised by the gas inlet device 126, and to the at least one sample loop 170. The third connection 174 may directly be connected to the vacuum 124, or, as depicted in Figure 2a, via the first connection 132 as comprised by the vacuum control device 122. However, still further embodiments may also be feasible.

The fourth valve 172 may, preferably, have at least six ports and at least two positions. However, further kinds of valves may also be feasible. As schematically depicted in the bottom of Figure 2a, the fourth valve 172 may be capable of assuming two different positions, an OFF position 176 and an ON position 178. The bars indicate flow paths in the OFF position 176 and in the ON position 178, respectively. Herein, vacuum is provided to the sample loop 170 in the OFF position 176, while the known volume of the gas stream 114 is provided to sample loop 170 in the ON position 178.

As further shown in Figure 2a, the volume control device 168 comprises a second manometer 180 which is designed for monitoring a second pressure that is prevailing in the volume control device 168. Preferably, the second manometer 180 is an electronic manometer having a reading accuracy of 5 mbar, more preferred of 1 mbar, in particular of 0.1 mbar, and accuracy of less than 0.5 %, more preferred of less than 0.25 %, in particular of less than 0.2 % full scale output.

For further details concerning Figure 2a, reference can be made to the description of Figure 1 above.

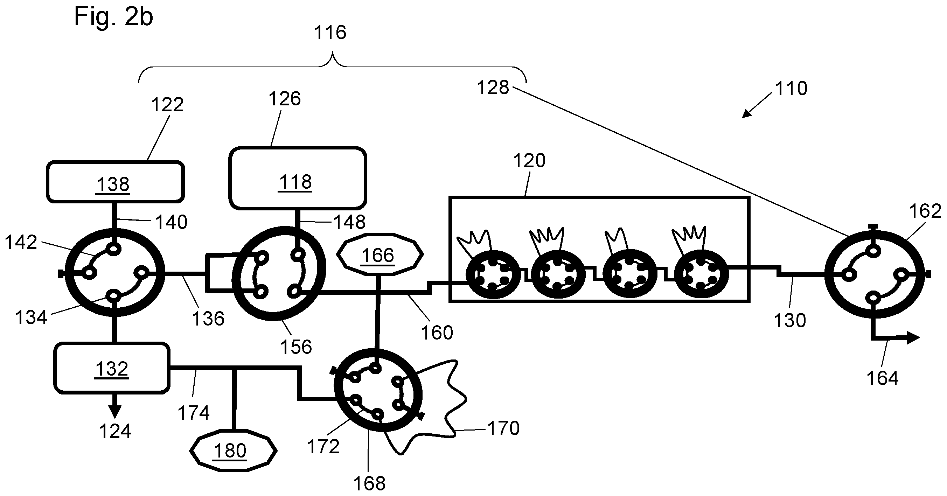

Figure 2b schematically illustrates a further preferred embodiment of the system 110 for determining at least one property of the gaseous component 112 in the gas stream 114 comprising the assembly 116 for supplying the gas stream 114 from the sample 118 to the analytical instrument 120 according to the present invention. In contrast to the embodiment of Figure 2a, the assembly 116 as shown in Figure 2b comprises a plurality of automatically controlled valves, preferably a cascade of 4-port 2-position valves and/or 6-port 2-position valves. In addition, the pressure can be monitored in an electronically manner, thereby contributing to a more user-friendly fashion. A particular advantage of this embodiment comprises enabling a temperature control of the whole system 110, especially performing an injection of the gas stream 114 at a defined elevated temperature in order to prevent the gas from condensation, preferably within both the gas inlet device 126 and a loop system that may be comprised by the analytical instrument 120.

For further details concerning Figure 2b, reference can be made to the description of Figures 1 and 2a above.

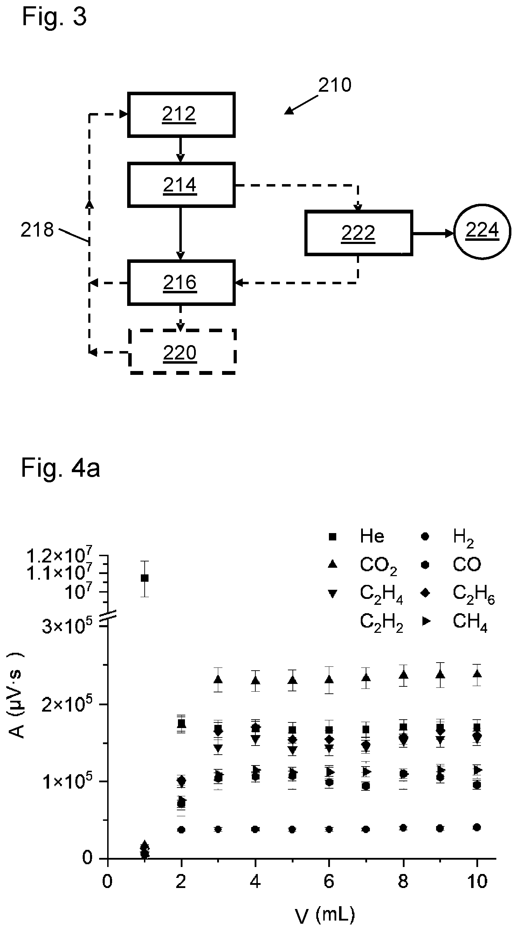

Figure 3 illustrates a preferred embodiment of a method 210 for supplying the gas stream 114 from the sample 118 to the analytical instrument 120 by using the assembly 116 according to the present invention.

In an evacuating step 212 according to step a), the assembly 116, in particular the conduits and receptacles which are comprised by the assembly 116, is evacuated by providing access to the vacuum 124 by using the vacuum control device 122. For this purpose,

- one or both of the two further valves A1, B1 142, 142' are closed to impede a flow of the stream 144 of the inert carrier gas;
- both of the two first valves 134, 134' A2, B2 are open to provide the desired access to the vacuum 124;
- both valves C1, C2 of the second valve 156 are open to fully evacuate the conduits of the gas inlet device 126; and
- one or both the two third valves A3, B3 162, 162' are closed to inhibit a gas exchange via the second connection 164 in the gas control device 128.

After a first period of time, the access to the vacuum 124 for the gas inlet device 126 is terminated according to step b) by closing the valve C1 as comprised by the second valve 156

In a supplying step 214 further according to step b), the gas stream 114 is supplied from the sample 118 via the coupling element 148 in more detail to the gas inlet device 126. In the preferred embodiment as described above, the quick connect male adapter, which constitutes the first portion 150 of the coupling element 148, is closed when disconnected is opened by connecting it to the corresponding female quick connect counterpart, which constitutes the second portion 152 of the coupling element 148 being located at the sample 118. By gas insertion, conduits of the gas inlet device 126 and of the gas control device 128 are filled with the gas stream 114 provided by the sample 118. This filling of the conduits can be controlled by monitoring a pressure on the first manometer M2, 166.

In a measuring step 216 according to step c), a further period of time is provided for performing one or more measurements in the analytical instrument 120 for determining one or more properties of the gaseous component 112 in the gas stream 114. As already indicated above, the at least one property does, however, not include a pressure, a partial pressure, or a volume of the gaseous component 112.

In a preferred embodiment, the method 210 according to the present invention can be performed in form of repeated measuring cycles 218, wherein each cycle starts with the evacuating step 212, continues with the supplying step 214, and terminates with measuring step 216. After each measuring step 216, a new measuring cycle 218 is started by performing the evacuating step 212, in particular to ensure that no traces of a previously measured gaseous component 112 may remain in the assembly 116. In this manner, consecutive gas streams 114 that may originate from a single sample 118 can, subsequently be measured. Alternatively or in addition, a number of gas streams 114 that may originate from different samples 118 can, subsequently be measured. However, further embodiments are feasible.

In this further preferred embodiment, the method 210 may, further, comprise a flushing step 220 according to step e), which comprises flushing the assembly 116 by providing the stream 144 of the inert carrier gas by using the vacuum control device 122. For this purpose,

- both two further valves A1, B1 142, 142' are open to generate the desired flow of the stream 144 of the inert carrier gas;
- one or both of the two first valves 134, 134'A2, B2 are closed to impede the access to the vacuum 124;
- both valves C1, C2 of the second valve 156 are open to fully flush the conduits of the gas inlet device 126 with the stream 144 of the inert carrier gas; and
- both third valves A3, B3 162, 162' are open to fully flush the conduits of the gas control device 128.

In this manner, the conduits and receptacles comprised by the assembly 116 can be emptied from the gas stream 114 and filled with the inert carrier gas.

In a particularly preferred embodiment, the method 210 may, further, comprise a determining step 222 according to step d), which comprises determining a volume 224 of the gas stream 114 by using the volume control device 168. The determining step 222 is performed after the evacuating step 212, preferably during the supplying step 214, after the supplying step 214; during the measuring step 216 and/or after the measuring step 216.

In a first embodiment, the exemplary assembly 116 of Figure 1 can be used for determining an absolute amount of the gaseous component 112 in the gas stream 114 by supplying the known entire gas volume which is comprised by the sample 118 to the analytical instrument 120.

In a further embodiment, the exemplary assembly 116 of Figure 1 can, further, be used for determining an absolute amount of the gaseous component 112 in the gas stream 114 by applying the following steps:

(i) an introducing step, which comprises introducing a defined amount of at least one inert gas, in particular krypton (Kr) or a mixture of Kr and argon (Ar), into the sample 118, in particular by using a syringe or a click connect port, thereby generating a gas mixture comprising the defined amount of the at least one inert gas and the gaseous component 112 in the sample 118 to be determined;

(ii) a modified supplying step, wherein the sample is attached to the gas inlet device 126, thereby supplying the gas mixture into the assembly 116;

(iii) a modified measuring step, whereby the defined amount of the at least one inert gas, in particular the Kr, within the gas mixture is measured by using the analytical instrument 120; and

(iv) an analyzing step, which comprises determining an absolute amount of the gaseous component 112 in the gas stream 114 by using calibration measurements with precisely defined quantities of both the at least one inert gas, in particular the Kr, and of the gaseous component 112 from the sample 118, thereby, particularly, determining a dilution of the gaseous component 112 from the sample 118 by using the defined amount of the at least one inert gas, in particular Kr.

In this manner, quantitative amounts of the gaseous component 112 in the sample 118 can be determined by using the exemplary assembly 116 of Figure 1 without requiring the volume control device 168 as comprised by the exemplary assembly 116 of Figure 2a or 2b. This manner of determining the quantitative amounts of the gaseous component 112 in the sample 118 can be used as an alternative or in addition to the determination of the volume 224 of the gas stream 114 by using the volume control device 168 according to the exemplary assembly 116 of Figure 2a or 2b, especially in order to provide a second independent determination of the gas volume and/or to reduce an error of the determining step 222.

Determining an absolute amount of a gas can, preferably, be performed in the following manner. In principal, it is assumed that the requirements of the well-known ideal gas equation $pV = nRT$, wherein $p$ denotes a pressure, $V$ a volume, $n$ a total amount of gas, R the gas constant, and T the temperature of the gas are met during the determining step 222. Initially, the entire volume $V_s$ of the gas sample is located in a container in the sample 118 comprising the gas having a volume $V_1$ and a pressure $p_1$ (e.g. $p_1$ = 1 atm). During the supplying step 214, the whole gas sample is supplied to the assembly 116 having a volume of $V_{p1} + V_a$, wherein $V_{p1}$ denotes the volume of the conduits of the assembly 116 and $V_a$ the volume of the adapter formed by the first portion 150 of the coupling element 148, resulting a pressure $p_2$ in the conduits of the assembly 116. The difference between the pressure $p_2$ and the pressure $p_1$ can be expressed as $\Delta u$. For gas calibration, an amount of gas $n_i$ which is comprised by the calibration gas having a mole fraction $\alpha$, can be obtained according to equation (1) as

$$n_i = \alpha\, n = \alpha\, \frac{V_1 p_1}{R\, T} \qquad (1)$$

In a still further embodiment, the absolute amount of the gaseous component 112 in the gas stream 114 can be determined during the determining step 222 by using the exemplary assembly 116 of Figure 2a or 2b. After controlling the filling of the conduits by monitoring the pressure on the first manometer M2, 166 in the control device 128, the pressure at the manometer M3, 180 in the volume control device 168 is monitored. Subsequently, the fourth valve 172 as further comprised by the volume control device 168 is switched in a manner that a portion of the gas stream 114 is supplied to the sample loop 170 having a known volume, whereby the pressure in the assembly is diminished, which can be monitored by the first manometer M2, 166. Preferably, the measuring step 216 can be started after supplying the portion of the gas stream 114 to the sample loop 170. Since the number of molecules in the gas stream 114 which are supplied to the analytical instrument 120 is decreased by supplying the portion of the gas stream 114 to the sample loop 170, the measuring step 216 can, alternatively or in addition, be started prior to filling the sample loop 170 with the portion of the gas stream 114 has commenced. However, further embodiments are feasible.

For determining the absolute amount of a gas, it is assumed here that all conduits of the exemplary assembly 116 according Figure 2a or 2b are completely evacuated and that the ideal gas equation as presented above is valid for all gases at each state. Additionally, it is assumed that the volume $V_{p2}$ of the gas inlet device 126 as well as the volume $V_a$ of the adapter formed by the first portion 150 of the coupling element 148 is constant over the whole measuring step 216. In addition to the considerations as presented above, the sample loop 170 in the volume control device 168 can, additionally, be filled.

In a first step, the volume $V_{p2}$ of the conduits in the gas inlet device 126 can be determined. By using syringe injection, the whole syringe volume $V_1$, which is in a syringe under a known pressure $p_0$, e.g. a laboratory pressure, can be injected into the completely evacuated volumes $V_{p2} + V_a$ when

- the valve C1 of the second valve 156 is closed;
- the valve C2 of the second valve 156 is open;
- the fourth valve 172 in the OFF position 176 as shown in Figure 2a; and
- one or both the two third valves A3, B3 162, 162' in the gas control device 128 are closed.

The pressure in the assembly 116 after supplying the gas is $p_2 = p_0 + \Delta p_1$, wherein $\Delta p_1$ denotes a differential pressure between a normal pressure $p_0$ and a conduit pressure $p_2$ after supplying, i.e. $\Delta p_1 = p_2 - p_0$, and wherein the volume is defined as $V_2 = V_{p2} + V_a$.

Thereafter, the coupling element 148 can be disconnected without gas lost, whereby a newly assumed state in the exemplary assembly 116 of Figure 2a can be defined as $V_{2a} = V_{p2}$ and $p_{2a} = p_2 = p_0 + \Delta p_1$. The sample loop 170 having the known volume $V_{loop}$ is, subsequently, connected by switching the fourth valve 172 into the ON position 178 as shown in Figure 2a, and the differential pressure is determined. The supplied gas now occupies the volume $V_3 = V_{p2} + V_{loop}$ at a pressure $p_3 = p_0 + \Delta p_2$, wherein $\Delta p_2$ corresponds to a modified differential pressure between the normal pressure $p_0$ and the modified pressure $p_3$ in the conduits of the assembly 116. As a result, the volume $V_{p2}$ of the conduits can be determined according to Equation 2 as

$$V_{p2} = \frac{p_0 + \Delta p_2}{\Delta p_1 - \Delta p_2}\, V_{loop} \qquad (2)$$

In a second step, the first step is repeated without disconnecting the coupling element 148 in order to determine the volume of the adapter formed by the first portion 150 of the coupling element 148. Herein,

- the gas to be supplied to the assembly 116 of Figure 2a has a volume $V_1$ and a pressure $p_0$;
- the whole gas sample is supplied to the conduits in the gas inlet device 126 having a volume of $V_2 = V_a + V_{p2}$ and a

pressure of $p_2 = p_0 + \Delta p_1$; and

- the supplied gas now occupies the volume $V_3 = V_a + V_{p2} + V_{loop}$ under a pressure of $p_3 = p_0 + \Delta p_2$.

As a result, the adapter volume $V_a$ can be determined according to Equation 3 as

$$V_a = \frac{p_0 + \Delta p_2}{\Delta p_1 - \Delta p_2} V_{loop} - V_{p2} \qquad (3)$$

Apparently, the absolute value $\Delta p_2$ in Equations (2) and (3) differs with respect to each other.

A calibration can now be performed based on a knowledge of the volumes $V_{p2}$ and $V_a$ in the exemplary assembly 116 of Figure 2a. A known volume of calibration gas is supplied through the coupling element 148 having the volume $V_a$ into the volume $V_{p2}$ of the conduits in the gas inlet device 126. Using the ideal gas equation, an amount $n_i$ of calibration gas species $i$ can be determined according to $n_i = \alpha_i \cdot n = (\alpha_i \cdot p \cdot V)/(R \cdot T)$, wherein $p$ denoted the laboratory air pressure, $\alpha_i$ a mol fraction of compound $i$ in the gas mixture, $T$ the temperature, $V$ the syringe volume, and $\alpha$ a mole fraction of species $i$ in the calibration gas. The number of particles $n_p$ (moles) in the pipe volume $V_{p,i}$ now equals Equation (4)

$$n_{p,i} = \frac{n_i V_{p2}}{V_{p2} + V_a} \qquad (4)$$

Different volumes of calibration gas injected into the assembly 116 of Figure 2a allow a determination of a correlation between the area of a signal which is generated by the gas chromatography device GC for the amount $n_i$ of the calibration gas species $i$ and the number of particles $n_p$ in the volume the calibration gas species $I$ assume in the conduits of the exemplary assembly 116 of Figure 2a.

Thereafter, the sample gas can then be measured with both, unknown individual ($n_i$) and unknown total gas amounts ( $n_s = \sum_{i=1}^{m} n_i$ ) of all gas species $m$ in a container comprising the sample 118 having the gas volume $V_1 = V$ at pressure $p_1 = p_s$, wherein the volume $V$ is assumed to remain constant during the measurement, in particular by using a gas container, or a pouch-bag cell having gas tubes without electrode compressibility. As soon as the container is connected and the sample gas has been supplied to the assembly 116 having the volume $V_{p2}$, the assembly 116 exhibits the states $n_2 = n_s$, $p_2 = p_0 + \Delta p_1$ and $V_2 = V_s + V_{p2}$, wherein $\Delta p_1$ the differential pressure between a normal pressure $p_0$ and a conduit pressure $p_2$ after suppling, as displayed by the first manometer M2, 166. The determination of the gas volume is now performed using the volume control device by increasing the volume by the loop volume $V_{loop}$ to a new state having $V_3 = V_s + V_{p2} + V_L$ and $p_3 = p_0 + \Delta p_2$, whereby a determination of $V_s$ and of the total particle number ($n_s$) can be performed according to Equation 5 by

$$V_s = \frac{p_0 + \Delta p_2}{\Delta p_1 - \Delta p_2} V_{loop} - V_p \;\; ; \;\; n_s = \frac{p_3 (V_s + V_{p2} + V_{loop})}{RT} \qquad (5)$$

Thereafter, the measuring step 216 can be started. By using both measurement results and calibration data, the absolute amount $n_i$ of species $i$ in the volume $V_{p2}$ can be determined. From this, the total volume $V_{total}$ can be used to determine the total amount of substance of species $i$ (in moles) as well as a mole fraction $\alpha_i$ of the species $i$ in the sample gas in ppm according to Equation 6

$$n_i = \frac{n_{p,i}(V_s + V_{p2} + V_{loop})}{V_{p2}} \;\; \text{and} \;\; \alpha_i = \frac{n_i}{n_s} \qquad (6)$$

The quantities which are determined according to Equation (6) are the actual gas quantities formed in the container of the sample 118, thus enabling a direct determination of a single gas quantity formed without using an internal standard and without external gas volume determination.

In alternative embodiment, the measuring step 216 can be performed prior to the determining step 222, e.g. when the gas volume is too small to be detected in the gas chromatography device GC. However, using loops in the analytical instrument 120, particularly in the gas chromatography device GC, results in an additional modification of the gas content in the conduits of the assembly 116 system. A corresponding adaption of Equation 5 results in Equation 7 as

$$V_s = \frac{p_0 + \Delta p_3}{\Delta p_2 - \Delta p_3} V_{loop} - V_p \;\; \text{and} \;\; n_s = \frac{p_0 + \Delta p_1}{RT} \frac{p_0 + \Delta p_3}{\Delta p_2 - \Delta p_3} V_{loop} \qquad (7).$$

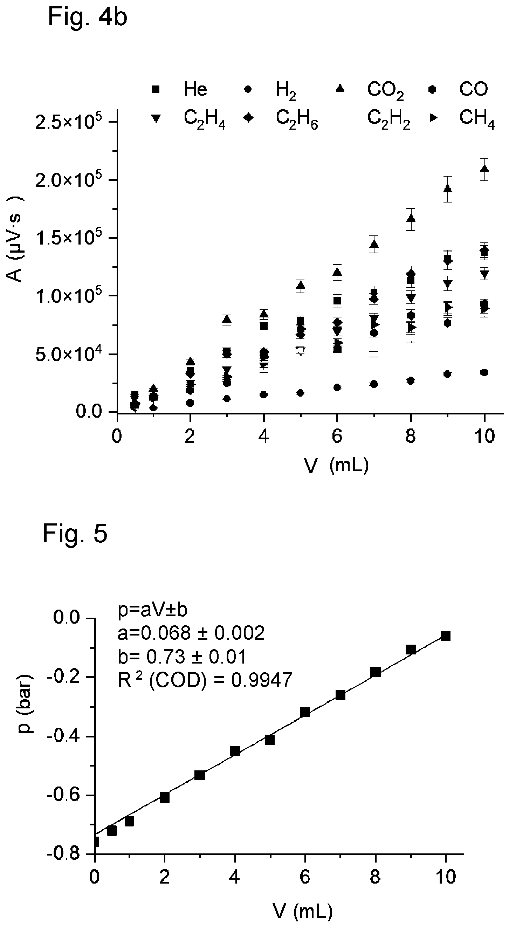

Figure 4 illustrates experimental results which demonstrate a correlation of a peak area $A$ in $\mu V \cdot s$ versus an injected volume $V$ of calibration gas mixtures in milliliters ($mL$) for various indicated gases. For this purpose, selected gas amounts of 0.5 $mL$ to 10 $mL$ of a calibration gas were injected by syringe using a septum closed adapter.

Figure 4a shows the results when a prior art setup is used for this purpose. Herein, the peak areas $A$ of the gases is increasing until an injection volume of approx. 3 $mL$ is reached, whereas the peak areas $A$ remain constant above the injection volume of approx. $3\ mL$. As a particular disadvantage, the minimum amount of 3 $mL$ is also quite high. This behavior can be explained by considering a backflush of helium gas of individual columns within the gas chromatography device GC when they are not used.

In contrast hereto, Figure 4b shows the results when the assembly 116, either of Figure 1 or 2, according to the present invention is used. Herein, the signal area $A$ increases depending on the amount of gas as introduced. Depending on a sensitivity of the selected gas, different areas A having different linear gradients are received, wherein hydrogen ($H_2$) exhibits the smallest slope, while carbon dioxide ($CO_2$) exhibits the strongest slope.

Figure 5 illustrates a gas volume dependent pressure obtained by using the assembly 116, either of Figure 1 or 2, according to the present invention. A linear relationship $p = aV + b$ between gas volume $V$ and pressure $p$ having a high correlation coefficient $R^2 (COD) = 0.9947$ can clearly be observed. This observation can be used as a basis for determining the injected volume of the gas based on the pressure detected by the first manometer M2, 166 during engagement of the sample loop 170. In addition, the correlation between the gas volume $V$ and the pressure $p$ allows the determination of the total amount of gas injected in order to obtain a semi-quantitative information about the analyzed gas. Figure 5 shows that the linear relationship $p = aV + b$ is maintained, independently from an increase of the input gas volume $V$ having a pressure $p$ increasing into the positive range.

List of Reference Signs

| | |
|---|---|
| 110 | system for determining at least one property of a gaseous component in a gas stream |
| 112 | gaseous component |
| 114 | gas stream |
| 116 | assembly for supplying a gas stream from a sample to at least one analytical instrument |
| 118 | sample |
| 120 | analytical instrument |
| 122 | vacuum control device |
| 124 | vacuum |
| 126 | gas inlet device |
| 128 | gas control device |
| 130 | gas output stream |
| 132 | first connection |
| 134, 134' | first valve |
| 136 | first outlet |
| 138 | source |
| 140 | further connection |
| 142, 142' | further valve |
| 144 | stream of inert carrier gas |
| 146 | further manometer |
| 148 | coupling element |
| 150 | first portion |
| 152 | second portion |
| 154 | counterpart |
| 156 | second valve |
| 158 | second outlet |
| 160 | gas input stream |
| 162, 162' | third valve |
| 164 | second connection |
| 166 | first manometer |
| 168 | volume control device |
| 170 | sample loop |
| 172 | fourth valve |
| 174 | third connection |

| 176 | OFF position |
| 178 | ON position |
| 180 | second manometer |
| 210 | method for supplying a gas stream from a sample to at least one analytical instrument |
| 212 | evacuating step |
| 214 | supplying step |
| 216 | measuring step |
| 218 | measuring cycle |
| 220 | flushing step |
| 222 | determining step |
| 224 | volume of the gas stream |

**Claims**

1. An assembly (116) for supplying a gas stream (114) from a sample (118) to at least one analytical instrument (120), comprising

- a vacuum control device (122) configured for providing a vacuum (124), having

  ○ a first connection (132) to the vacuum (124),
  ○ at least one first valve (134, 134') connected to said first connection (132), said valve being designed for adjusting the vacuum (124), and
  ○ a first outlet (136) connected to said first valve (134, 134');

- a gas inlet device (126) for supplying the gas stream (114) from the sample (118) to the at least one analytical instrument (120), having

  ○ a coupling element (148) designed for providing a coupling to the sample (118) for receiving the gas stream (114) from the sample (118), wherein said assembly is **characterized in that** said gas inlet device (126) further comprises a second valve (156) designed for switching between the first outlet (136) and the coupling element (148), and
  ○ at last one second outlet (158) connected to said second valve (156) for supplying the gas stream (114) as a gas input stream (160) to the at least one analytical instrument (120); and **in that** said assembly also comprises

- a gas control device (128) for receiving a gas output stream (130) from the at least one analytical instrument (120), having

  ○ at least one third valve (162, 162') designed for adjusting a pressure of the gas output stream (130), and
  ○ at last one second connection (164) connected to said third valve (162, 162'), said second connection being designed for at least one of releasing the gas output stream (130) or receiving a gas balance stream.

2. The assembly (116) according to the preceding claim, wherein the gas control device (128) further comprises a first manometer (166).

3. The assembly (116) according to any one of the preceding claims, wherein the at least one first valve (134, 134'), the at least one second valve (156), and the at least one third valve (162, 162') are oil-free and grease-free or cleaned from oil or grease, in particular selected from a needle valve, a diaphragm valve, or a multi-port valve.

4. The assembly (116) according to any one of the preceding claims, wherein the coupling element (148) has a reception, wherein the reception is designed for being connected to a fitting counterpart attached to the sample (118).

5. The assembly (116) according to any one of the preceding claims, wherein the coupling element (148) comprises a septum being inserted into an attachment.

6. The assembly (116) according to any one of the preceding claims, further comprising

- a volume control device (168) configured for determining a volume of the gas stream (114), having

∘ at least one sample loop (170) designed for receiving a known volume of the gas stream (114), and
∘ a fourth valve (172) connected to a third connection (174) to the vacuum (124), to the at least one second outlet (158) comprised by the gas inlet device (126), and to the at least one sample loop (170).

7. The assembly (116) according to the preceding claim, wherein the fourth valve (172) has at least six ports and at least two positions.

8. The assembly (116) according to any one of the two preceding claims, wherein the volume control device (168) further comprises a second manometer (180).

9. A system (110) for determining at least one property of a gaseous component (112) in a gas stream (114), comprising

   - the assembly (116) for supplying a gas stream (114) from a sample (118) to at least one analytical instrument (120) according to any one of the claims 1 to 8; and
   - the at least one analytical instrument (120).

10. The system (110) according to the preceding claim, wherein the at least one analytical instrument is selected from a gas chromatography device, a mass spectrometer, a Fourier-transform infrared spectrometer, a gas detector, or a Raman spectrometer.

11. A use of the system (120) according to any one of claims 9 or 10 for a quantitative measurement of a gaseous component (112) in a gas stream (114) released by a chemical energy storage system.

12. A method (210) for supplying a gas stream (114) from a sample (118) to at least one analytical instrument (120) by using an assembly (116) for supplying the gas stream (114) from the sample (118) to the at least one analytical instrument (120) according to any one of claims 1 to 8, the method (210) comprising the following steps:

   a) evacuating the assembly (116) by providing access to a vacuum (124) by using the vacuum control device (122);
   b) terminating the access to the vacuum (124), and supplying the gas (114) stream from the sample (118) to the gas inlet device (126); and
   c) providing time for performing at least one measurement in the at least one analytical instrument (120) for determining at least one property of a gaseous component (112) in the gas stream (114).

13. The method (210) according to the preceding claim, comprising a further step of
   d) determining a volume (224) of the gas stream (114) by using at least one of

   ∘ a defined amount of at least one inert gas; or
   ∘ a volume control device (168) according to any one of claims 6 to 8.

14. The method (210) according to the preceding claim, wherein determining the volume of the gas stream (114) by using the at least one of a defined amount of at least one inert gas comprises the following sub-steps:

   (i) introducing the defined amount of the at least one inert gas into the sample (118), thereby generating a gas mixture comprising the defined amount of the at least one inert gas and the gaseous component (112) in the sample (118);
   (ii) supplying the gas mixture from the sample (118) to the gas inlet device (126);
   (iii) measuring the defined amount of the at least one inert gas within the gas mixture by using the at least one analytical instrument (120); and
   (iv) determining an absolute amount of the gaseous component (112) in the gas stream (114) by using calibration measurements with precisely defined quantities of both the at least one inert gas and of the gaseous component (112) from the sample (118).

15. A computer program comprising instructions which, when the program is executed on a computer connected to a system according to any one of claims 9-10, causes a processing device to perform a method (210) for supplying a gas stream (114) from a sample (118) to at least one analytical instrument (120) according to any one of claims 12 to 14 by using the assembly (116) for supplying the gas stream (114) from the sample (118) to the at least one analytical instrument (120) according to any one of claims 1 to 8, wherein the at least one first valve (134, 134'), the second valve (156), and the at least one third valve (162, 162') comprised by the assembly (116) are automatically controlled valves.

**Patentansprüche**

1. Anordnung (116) zum Zuführen eines Gasstroms (114) aus einer Probe (118) zu mindestens einem Analyseinstrument (120), umfassend

   - eine Vakuumkontrollvorrichtung (122), die zum Bereitstellen eines Vakuums (124) ausgebildet ist, aufweisend

     ○ eine erste Verbindung (132) zu dem Vakuum (124),
     ○ mindestens ein erstes Ventil (134, 134'), das mit der ersten Verbindung (132) verbunden ist, wobei das Ventil zum Einstellen des Vakuums (124) ausgelegt ist, und
     ○ einen ersten Auslass (136), der mit dem ersten Ventil (134, 134') verbunden ist;

   - eine Gaseinlassvorrichtung (126) zum Zuführen des Gasstroms (114) aus der Probe (118) zu dem mindestens einen Analyseinstrument (120), aufweisend

     ○ ein Kopplungselement (148), das zum Bereitstellen einer Kopplung mit der Probe (118) zum Aufnehmen des Gasstroms (114) aus der Probe (118) ausgelegt ist,
     **wobei die Anordnung dadurch gekennzeichnet ist, dass** die Gaseinlassvorrichtung (126) ferner ein zweites Ventil (156) umfasst, das zum Umschalten zwischen dem ersten Auslass (136) und dem Kopplungselement (148) ausgelegt ist, und
     ○ mindestens einen mit dem zweiten Ventil (156) verbundenen zweiten Auslass (158) zum Zuführen des Gasstroms (114) als einen Gaseingangsstrom (160) zu dem mindestens einen Analyseinstrument (120);

   **und dadurch, dass die Anordnung zudem Folgendes umfasst:**

   - eine Gaskontrollvorrichtung (128) zum Aufnehmen eines Gasausgangsstroms (130) von dem mindestens einen Analyseinstrument (120), aufweisend

     ○ mindestens ein drittes Ventil (162, 162'), das zum Einstellen eines Drucks des Gasausgangsstroms (130) ausgelegt ist, und
     ○ mindestens eine zweite Verbindung (164), die mit dem dritten Ventil (162, 162') verbunden ist, wobei die zweite Verbindung zum Freisetzen des Gasausgangsstroms (130) und/oder zum Aufnehmen eines Gasausgleichsstroms ausgelegt ist.

2. Anordnung (116) nach dem vorhergehenden Anspruch, wobei die Gaskontrollvorrichtung (128) ferner ein erstes Manometer (166) umfasst.

3. Anordnung (116) nach einem der vorhergehenden Ansprüche, wobei das mindestens eine erste Ventil (134, 134'), das mindestens eine zweite Ventil (156) und das mindestens eine dritte Ventil (162, 162') ölfrei und fettfrei oder von Öl oder Fett gereinigt, insbesondere aus einem Nadelventil, einem Membranventil oder einem Mehrwegventil ausgewählt sind.

4. Anordnung (116) nach einem der vorhergehenden Ansprüche, wobei das Kopplungselement (148) eine Aufnahme aufweist, wobei die Aufnahme dazu ausgelegt ist, mit einem an der Probe (118) befestigten passenden Gegenstück verbunden zu sein.

5. Anordnung (116) nach einem der vorhergehenden Ansprüche, wobei das Kopplungselement (148) ein Septum umfasst, das in eine Befestigung eingesetzt ist.

6. Anordnung (116) nach einem der vorhergehenden Ansprüche, ferner umfassend

   - eine Volumenkontrollvorrichtung (168), die zum Bestimmen eines Volumens des Gasstroms (114) ausgebildet ist, aufweisend

     ○ mindestens eine Probenschleife (170), die zum Aufnehmen eines bekannten Volumens des Gasstroms (114) ausgelegt ist, und

◦ ein viertes Ventil (172), das mit einer dritten Verbindung (174) mit dem Vakuum (124), mit dem mindestens einen zweiten Auslass (158), der in der Gaseinlassvorrichtung (126) enthalten ist, und mit der mindestens eine Probenschleife (170) verbunden ist.

7. Anordnung (116) nach dem vorhergehenden Anspruch, wobei das vierte Ventil (172) mindestens sechs Anschlüsse und mindestens zwei Stellungen aufweist.

8. Anordnung (116) nach einem der beiden vorhergehenden Ansprüche, wobei die Volumenkontrollvorrichtung (168) ferner ein zweites Manometer (180) umfasst.

9. System (110) zum Bestimmen mindestens einer Eigenschaft einer gasförmigen Komponente (112) in einem Gasstrom (114), umfassend

   - die Anordnung (116) zum Zuführen eines Gasstroms (114) aus einer Probe (118) zu mindestens einem Analyseinstrument (120) nach einem der Ansprüche 1 bis 8; und
   - mindestens ein Analyseinstrument (120).

10. System (110) nach dem vorhergehenden Anspruch, wobei das mindestens eine Analyseinstrument aus einer Gaschromatographievorrichtung, einem Massenspektrometer, einem Fourier-Transformations-Infrarotspektrometer, einem Gasdetektor oder einem Raman-Spektrometer ausgewählt ist.

11. Verwendung des Systems (120) nach einem der Ansprüche 9 oder 10 zur quantitativen Messung einer gasförmigen Komponente (112) in einem von einem chemischen Energiespeichersystem freigesetzten Gasstrom (114).

12. Verfahren (210) zum Zuführen eines Gasstroms (114) aus einer Probe (118) zu mindestens einem Analyseinstrument (120) unter Verwendung einer Anordnung (116) zum Zuführen des Gasstroms (114) aus der Probe (118) zu dem mindestens einen Analyseinstrument (120) nach einem der Ansprüche 1 bis 8, wobei das Verfahren (210) die folgenden Schritte umfasst:

   a) Evakuieren der Anordnung (116) durch Bereitstellen eines Zugangs zu einem Vakuum (124) unter Verwendung der Vakuumkontrollvorrichtung (122);
   b) Beenden des Zugangs zu dem Vakuum (124), und Zuführen des Gasstroms (114) aus der Probe (118) zu der Gaseinlassvorrichtung (126); und
   c) Bereitstellen von Zeit zum Durchführen mindestens einer Messung in dem mindestens einen Analyseinstrument (120) zum Bestimmen mindestens einer Eigenschaft einer gasförmigen Komponente (112) in dem Gasstrom (114).

13. Verfahren (210) nach dem vorhergehenden Anspruch, umfassend einen weiteren Schritt zum
   d) Bestimmen eines Volumens (224) des Gasstroms (114) unter Verwendung von mindestens einer von Folgenden

   ◦ einer definierten Menge von mindestens einem Inertgas; oder
   ◦ eine Volumenkontrollvorrichtung (168) nach einem der Ansprüche 6 bis 8.

14. Verfahren (210) nach dem vorhergehenden Anspruch, wobei das Bestimmen des Volumens des Gasstroms (114) unter Verwendung der mindestens einen einer definierten Menge von mindestens einem Inertgas die folgenden Teilschritte umfasst:

   (i) Einbringen der definierten Menge des mindestens eines Inertgases in die Probe (118), dadurch Erzeugen eines Gasgemischs, das die definierte Menge des mindestens eines Inertgases und die gasförmige Komponente (112) in der Probe (118) umfasst;
   (ii) Zuführen des Gasgemischs aus der Probe (118) zu der Gaseinlassvorrichtung (126);
   (iii) Messen der definierten Menge des mindestens eines Inertgases innerhalb des Gasgemischs unter Verwendung des mindestens einen Analyseinstruments (120); und
   (iv) Bestimmen einer absoluten Menge der gasförmigen Komponente (112) in dem Gasstrom (114) unter Verwendung von Kalibrierungsmessungen mit genau definierten Mengen sowohl des mindestens eines Inertgases als auch der gasförmigen Komponente (112) aus der Probe (118).

**15.** Computerprogramm, das Anweisungen umfasst, das, wenn das Programm auf einem Computer ausgeführt wird, der mit einem System nach einem der Ansprüche 9-10 verbunden ist, bewirkt, dass eine Verarbeitungsvorrichtung ein Verfahren (210) zum Zuführen eines Gasstroms (114) aus einer Probe (118) zu mindestens einem Analyseinstrument (120) nach einem der Ansprüche 12 bis 14 unter Verwendung der Anordnung (116) zum Zuführen des Gasstroms (114) aus der Probe (118) zu dem mindestens ein Analyseinstrument (120) nach einem der Ansprüche 1 bis 8 durchführt, wobei das mindestens eine erste Ventil (134, 134'), das zweite Ventil (156) und das mindestens eine dritte Ventil (162, 162'), die in der Anordnung (116) enthalten sind, automatisch kontrollierte Ventile sind.

**Revendications**

**1.** Ensemble (116) pour acheminer un flux gazeux (114) en provenance d'un échantillon (118) vers au moins un instrument d'analyse (120), comprenant

    - un dispositif de commande de vide (122) configuré pour fournir un vide (124), ayant

        ∘ une première connexion (132) au vide (124),
        ∘ au moins une première soupape (134, 134') connectée à ladite première connexion (132), ladite soupape étant conçue pour régler le vide (124), et
        ∘ un premier refoulement (136) connecté à ladite première soupape (134, 134') ;

    - un dispositif d'admission de gaz (126) pour acheminer le flux gazeux (114) en provenance de l'échantillon (118) vers l'au moins un instrument d'analyse (120), ayant

        ∘ un élément de couplage (148) conçu pour fournir un couplage à l'échantillon (118) pour recevoir le flux gazeux (114) en provenance de l'échantillon (118),
        dans lequel ledit ensemble est **caractérisé en ce que** ledit dispositif d'admission de gaz (126) comprend en outre une deuxième soupape (156) conçue pour commuter entre le premier refoulement (136) et l'élément de couplage (148), et
        ∘ au moins un deuxième refoulement (158) connecté à ladite deuxième soupape (156) pour acheminer le flux gazeux (114) sous forme d'un flux d'entrée de gaz (160) vers l'au moins un instrument d'analyse (120) ; et

    **en ce que** ledit ensemble comprend également
    - un dispositif de commande de gaz (128) pour recevoir de l'au moins un instrument d'analyse (120) un flux de sortie de gaz (130), ayant

        ∘ au moins une troisième soupape (162, 162') conçue pour régler une pression du flux de sortie de gaz (130), et
        ∘ au moins une deuxième connexion (164) connectée à ladite troisième soupape (162, 162'), ladite deuxième connexion étant conçue pour au moins une parmi la libération du flux de sortie de gaz (130) ou la réception d'un flux d'équilibre de gaz.

**2.** Ensemble (116) selon la revendication précédente, dans lequel le dispositif de commande de gaz (128) comprend en outre un premier manomètre (166).

**3.** Ensemble (116) selon l'une des revendications précédentes, dans lequel l'au moins une première soupape (134, 134'), l'au moins une deuxième soupape (156) et l'au moins une troisième soupape (162, 162') sont exemptes d'huile et de graisse ou débarrassées de toute huile ou graisse, et sont en particulier choisies parmi une soupape à pointeau, une soupape à membrane ou une soupape à orifices multiples.

**4.** Ensemble (116) selon l'une des revendications précédentes, dans lequel l'élément de couplage (148) a un accueil, dans lequel l'accueil est conçu pour être connecté à une pièce correspondante de raccord fixée à l'échantillon (118).

**5.** Ensemble (116) selon l'une des revendications précédentes, dans lequel l'élément de couplage (148) comprend un septum qui est inséré dans une fixation.

**6.** Ensemble (116) selon l'une des revendications précédentes, comprenant en outre

- un dispositif de commande de volume (168) configuré pour déterminer un volume du flux gazeux (114), ayant
  ◦ au moins une boucle d'échantillon (170) conçue pour recevoir un volume connu du flux gazeux (114), et
  ◦ une quatrième soupape (172) connectée à une troisième connexion (174) au vide (124), à l'au moins un deuxième refoulement (158) compris dans le dispositif d'admission de gaz (126), et à l'au moins une boucle d'échantillon (170).

7. Ensemble (116) selon la revendication précédente, dans lequel la quatrième soupape (172) a au moins six orifices et au moins deux positions.

8. Ensemble (116) selon l'une des deux revendications précédentes, dans lequel le dispositif de commande de volume (168) comprend en outre un deuxième manomètre (180).

9. Système (110) pour déterminer au moins une propriété d'un composant gazeux (112) dans un flux gazeux (114), comprenant

   - l'ensemble (116) pour acheminer un flux gazeux (114) en provenance d'un échantillon (118) vers au moins un instrument d'analyse (120) selon l'une des revendications 1 à 8 ; et
   - l'au moins un instrument d'analyse (120).

10. Système (110) selon la revendication précédente, dans lequel l'au moins un instrument d'analyse est choisi parmi un dispositif de chromatographie en phase gazeuse, un spectromètre de masse, un spectromètre infrarouge à transformée de Fourier, un détecteur de gaz ou un spectromètre Raman.

11. Utilisation du système (120) selon l'une des revendications 9 ou 10 pour une mesure quantitative d'un composant gazeux (112) dans un flux gazeux (114) libéré par un système de stockage d'énergie chimique.

12. Méthode (210) pour acheminer un flux gazeux (114) en provenance d'un échantillon (118) vers au moins un instrument d'analyse (120) en utilisant un ensemble (116) pour acheminer le flux gazeux (114) en provenance de l'échantillon (118) vers l'au moins un instrument d'analyse (120) selon l'une des revendications 1 à 8, la méthode (210) comprenant les étapes suivantes :

    a) mettre sous vide l'ensemble (116) en fournissant l'accès à un vide (124) en utilisant le dispositif de commande de vide (122) ;
    b) mettre fin à l'accès au vide (124) et acheminer le flux gazeux (114) en provenance de l'échantillon (118) vers le dispositif d'admission de gaz (126) ; et
    c) fournir un temps pour effectuer au moins une mesure dans l'au moins un instrument d'analyse (120) pour déterminer au moins une propriété d'un composant gazeux (112) dans le flux gazeux (114).

13. Méthode (210) selon la revendication précédente, comprenant l'étape supplémentaire suivante
    d) déterminer un volume (224) du flux gazeux (114) en utilisant au moins un parmi

    ◦ une quantité définie d'au moins un gaz inerte ; ou
    ◦ un dispositif de commande de volume (168) selon l'une des revendications 6 à 8.

14. Méthode (210) selon la revendication précédente, dans laquelle la détermination du volume du flux gazeux (114) en utilisant l'au moins un parmi une quantité définie d'au moins un gaz inerte comprend les sous-étapes suivantes :

    (i) introduire la quantité définie de l'au moins un gaz inerte dans l'échantillon (118), générant ainsi un mélange gazeux comprenant la quantité définie de l'au moins un gaz inerte et le composant gazeux (112) dans l'échantillon (118) ;
    (ii) acheminer le mélange gazeux en provenance de l'échantillon (118) vers le dispositif d'admission de gaz (126) ;
    (iii) mesurer la quantité définie de l'au moins un gaz inerte dans le mélange gazeux en utilisant l'au moins un instrument d'analyse (120) ; et
    (iv) déterminer une quantité absolue du composant gazeux (112) dans le flux gazeux (114) en utilisant des mesures d'étalonnage avec des quantités précisément définies à la fois de l'au moins un gaz inerte et du composant gazeux (112) en provenance de l'échantillon (118).

15. Programme informatique comprenant des instructions qui, lorsque le programme est exécuté sur un ordinateur connecté à un système selon l'une des revendications 9 et 10, amènent un dispositif de traitement à mettre en œuvre une méthode (210) pour acheminer un flux gazeux (114) en provenance d'un échantillon (118) vers au moins un instrument d'analyse (120) selon l'une des revendications 12 à 14 en utilisant l'ensemble (116) pour acheminer le flux gazeux (114) en provenance de l'échantillon (118) vers l'au moins un instrument d'analyse (120) selon l'une des revendications 1 à 8, dans lequel l'au moins une première soupape (134, 134'), la deuxième soupape (156) et l'au moins une troisième soupape (162, 162') comprises dans l'ensemble (116) sont des soupapes à commande automatique.

Fig. 1

EP 4 317 965 B1

24

Fig. 2a

Fig. 2b

## Fig. 3

## Fig. 4a

Fig. 4b

Fig. 5

$$p = aV \pm b$$
$$a = 0.068 \pm 0.002$$
$$b = 0.73 \pm 0.01$$
$$R^2 \text{ (COD)} = 0.9947$$

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3696902 A1, LG CHEMICAL LTD

**Non-patent literature cited in the description**

- **P. STENZEL ; F. HORSTHEMKE ; M. WINTER ; S. NOWAK**. Chromatographic Techniques in the Research Area of Lithium Ion Batteries: Current State-of-the-Art. *Separations*, 2019, vol. 6, 26
- **B. ROWDEN ; N. GARCIA-ARAEZ**. A review of gas evolution in lithium ion batteries. *Energy Reports*, 2020, vol. 6, 10-18
- **G. GACHOT ; P. RIBIÈRE ; D. MATHIRON ; S. GRUGEON ; M. ARMAND ; J.-B. LERICHE ; S. PILARD ; S. LARUELLE**. Gas Chromatography/Mass Spectrometry As a Suitable Tool for the Li-Ion Battery Electrolyte Degradation Mechanisms Study. *Anal. Chem.*, 2011, vol. 83, 478-485